# EUROPÄISCHE PATENTSCHRIFT

(11) **EP 2 263 938 B1**
(45) Veröffentlichungstag und Bekanntmachung des Hinweises auf die Patenterteilung: **27.07.2016**
(21) Anmeldenummer: 10165190.9
(22) Anmeldetag: 08.06.2010
(51) Int. Cl.: B64G 1/58, F02K 9/64, F01D 5/18

(54) **Kühlvorrichtung für eine Effusions- oder Transpirationskühlung**
Cooling device for effusion or transpiration cooling
Dispositif de refroidissement pour un refroidissement par effusion ou par transpiration

(30) Priorität: 15.06.2009 DE 102009025457
(43) Veröffentlichungstag der Anmeldung: 22.12.2010
(73) Patentinhaber: Deutsches Zentrum für Luft- und Raumfahrt e.V., 51147 Köln (DE)
(72) Erfinder: Kuhn, Markus, 70711, Leinfelden-Echterdingen (DE); Elsässer, Henning, 70565, Stuttgart (DE)
(74) Vertreter: Hoeger, Stellrecht & Partner Patentanwälte mbB

(56) Entgegenhaltungen:
- DE-A1- 19 730 674
- DE-A1- 19 901 424
- DE-B- 1 273 907
- GB-A- 778 672
- US-A- 4 840 025
- US-A- 5 363 645

## Beschreibung

Die vorliegende Erfindung betrifft eine Kühlvorrichtung für eine Effusions- oder Transpirationskühlung, umfassend ein Kühlelement, welches eine einem Gasstrom zugewandte Kühloberfläche aufweist, wobei das Kühlelement aus einem offenporigen Material gebildet ist und wobei ein Kühlfluid quer zur Kühloberfläche durch das Kühlelement durchleitbar ist und an der Kühloberfläche einen Kühlfluidfilm bildet.

Derartige Kühlvorrichtungen werden in Bereichen eingesetzt, in denen sehr hohe thermische Belastungen auftreten, insbesondere zur Kühlung von Heißgaskammervorrichtungen wie z.B. Brennkammern von Raketentriebwerken oder in Kraftwerken. Die Begriffe "Effusionskühlung" und "Transpirationskühlung" werden in der Literatur z.T. unterschiedlich verwendet, wobei im Rahmen der vorliegenden Erfindung die folgende Definition zugrunde gelegt wird: Bei der Effusionskühlung ist das zugeführte und den Kühlfluidfilm bildende Kühlfluid gasförmig, während bei der Transpirationskühlung ein flüssiges Kühlfluid, d.h. in der Regel ein tiefkaltes verflüssigtes Gas, eingesetzt wird. Hierbei kann auch ein Phasenwechsel des Kühlfluids erfolgen.

Die Effusions- bzw. Transpirationskühlung ist äußerst effektiv, da das Kühlfluid aus einer Vielzahl von mikroporösen Öffnungen des offenporigen Materials austritt und somit an der Kühloberfläche des Kühlelements einen homogenen, flächigen Kühlfluidfilm ausbilden kann, im Gegensatz zu einer Zuführung von Kühlfluid z.B. durch Lochfelder. Dieser Kühlfluidfilm nimmt einen Teil der durch den Gasstrom zugeführten bzw. erzeugten Wärme auf und schützt das Kühlelement sowie die darunter liegenden Strukturen vor einem übermäßigen Wärmeeintrag. Eine Vorrichtung für eine Transpirationskühlung ist beispielsweise in der US 7,281,688 beschrieben. Eine weitere Vorrichtung ist aus der US 5,363,645 bekannt, die den nächstliegenden Stand der Technik darstellt und alle Merkmale des Oberbegriffes des Anspruchs 1 offenbart.

In der Grenzschicht, die sich zwischen dem Kühlfluidfilm und dem Gasstrom bildet, wird ein Teil des Kühlfluids in Richtung der Hauptströmungsrichtung des Gasstroms mitgerissen. Dabei kann durch eine Regulierung des Kühlfluiddurchsatzes durch das Kühlelement ein Gleichgewicht eingestellt werden, sodass der Kühlfluidfilm stets eine im Wesentlichen gleich bleibende und ausreichende Dicke aufweist. In der Praxis hat sich jedoch gezeigt, dass bei extremen Temperatur- und Strömungsbedingungen, wie sie z.B. in Raketenbrennkammern vorliegen, im Anlaufbereich der Effusions- bzw. Transpirationskühlung kein ausreichender Kühlfluidfilm aufgebaut werden kann. Unter dem Anlaufbereich ist dabei der endständige Randbereich des Kühlelements in Anströmrichtung des Gasstroms zu verstehen, in dem das aus der Kühloberfläche austretende Kühlfluid unmittelbar dem Gasstrom ausgesetzt ist, ohne dass bereits ein vorgebildeter Kühlfluidfilm vorliegt. In diesem Bereich ist das Kühlelement typischerweise mit einem Anschlusselement verbunden, z.B. mit dem Einspritzkopf im Fall einer Raketenbrennkammer.

Diese unzureichende Ausbildung des Kühlfluidfilms im Anlaufbereich führt zu einem übermäßigen Wärmeeintrag in das Kühlelement und kann im Extremfall zu dessen Versagen in diesem Bereich führen. Bei den aus dem Stand der Technik bekannten Kühlvorrichtungen kann dies, wenn überhaupt, nur durch eine starke Erhöhung des Kühlfluiddurchsatzes vermieden werden, wobei sich dann jedoch der Durchsatz von Kühlfluid in dem gesamten Kühlelement erhöht. Dies führt wiederum zu einer Überkühlung und einem unnötig hohen Verbrauch an Kühlfluid in den überwiegenden Bereichen des Kühlelements. Der vorliegenden Erfindung liegt daher die Aufgabe zu Grunde, eine Kühlvorrichtung für eine Effusions- oder Transpirationskühlung vorzuschlagen, bei der bereits im Anlaufbereich des Kühlelements ein ausreichender Kühlfluidfilm gebildet werden kann.

Diese Aufgabe wird bei der Kühlvorrichtung der eingangs genannten Art erfindungsgemäß mit den Merkmalen des Anspruchs 1 gelöst, insbesondere dadurch, dass das Kühlelement in Anströmrichtung des Gasstroms einen endständigen Teilbereich umfasst, in dem der Durchsatz von Kühlfluid pro Flächeneinheit der Kühloberfläche gegenüber den übrigen Bereichen des Kühlelements erhöht ist.

Durch den erhöhten Durchsatz von Kühlfluid in einem endständigen Teilbereich des Kühlelements kann der oben beschriebenen Problematik auf effektive Weise entgegengewirkt werden. Es wird dadurch der asymmetrischen Situation im Anlaufbereich des Kühlelements Rechnung getragen und somit die Bildung eines ausreichenden und gleichmäßigen Kühlfluidfilms entlang der gesamten Kühloberfläche des Kühlelements ermöglicht. Die relative Größe des endständigen Teilbereichs des Kühlelements und/oder das Ausmaß der Erhöhung des Kühlfluiddurchsatzes in diesem Bereich können im Rahmen der vorliegenden Erfindung entsprechend variiert werden, um die Kühlvorrichtung möglichst optimal an den Einsatzzweck und die jeweiligen Betriebsbedingungen anzupassen.

Günstigerweise ist das Kühlfluid im Wesentlichen senkrecht zur Kühloberfläche durch das Kühlelement durchleitbar. Das Kühlelement wird in der Regel so ausgebildet sein, dass bei einem Durchtritt des Kühlfluids senkrecht zur Kühloberfläche der kürzeste Weg zurückgelegt werden muss. Die Kühloberfläche selbst kann dabei je nach Art und Einsatzzweck der Kühlvorrichtung sowohl eine ebene als auch eine gekrümmte Fläche bilden. Bei einer Kühlvorrichtung für eine Brennkammer kann die Kühloberfläche z.B. zylinderförmig oder in Form eines Kegelstumpfes ausgebildet sein, und der Durchtritt des Kühlfluids erfolgt dann in Radialrichtung zur Hauptströmungsrichtung des Gasstroms.

Das offenporige Material, aus dem das Kühlelement gebildet ist, kann einen Metallschaum umfassen. Allerdings ist dabei die maximal tolerierbare Erwärmung des Kühlelements durch den Schmelzpunkt des verwendeten Metalls limitiert. Besonders bevorzugte offenporige Materialien umfassen daher ein keramisches Material, insbesondere ein keramisches Verbundmaterial wie z.B. eine Faserverbundkeramik. Derartige Materialien sind sowohl thermisch als auch mechanisch hoch belastbar. Besonders günstig sind z.B. keramische Materialien auf der Basis von Kohlenstoff oder Siliciumcarbid (SiC oder SiSiC), die gegebenenfalls mit Kohlenstofffasern bzw. Siliciumcarbidfasern verstärkt sein können, sowie Oxidkeramiken (z.B. auf Basis von Aluminiumoxid) und andere poröse Sinterkeramiken.

Um den erfindungsgemäßen höheren Durchsatz von Kühlfluid in dem endständigen Teilbereich des Kühlelements zu erreichen, ist gemäß einer bevorzugten Ausführungsform vorgesehen, dass das offenporige Material in dem endständigen Teilbereich eine höhere Permeabilität aufweist als in den übrigen Bereichen des Kühlelements. Der Kühlfluiddurchsatz wird in diesem Fall durch die (mikroskopischen) Materialeigenschaften des offenporigen Materials beeinflusst. Dabei kann die Permeabilität insbesondere durch eine geringere Dichte, durch eine höhere Porengröße und/oder durch einen geänderten Schichtaufbau des offenporigen Materials erhöht werden. Die Einstellung der Dichte bzw. Porosität ist insbesondere auch bei keramischen Verbundmaterialien auf der Basis von Carbiden, Siliciumcarbiden und Oxidkeramiken (z.B. Al₂O₃) in Abhängigkeit von der Wahl des Ausgangsmaterials und des Herstellungsverfahrens möglich.

Gemäß einer weiteren vorteilhaften Ausführungsform der Erfindung weist das Kühlelement in dem endständigen Teilbereich eine oder mehrere Aussparungen auf. In diesem Fall wird der erhöhte Durchsatz von Kühlfluid in diesem Bereich durch die geometrische Struktur des Kühlelements bewirkt. Die Aussparung(en) kann/können in verschiedener Weise dimensioniert und angeordnet sein, wobei durch die Aussparung(en) der von dem Kühlfluid zurückzulegende Weg durch das poröse Material verkürzt und dadurch der Durchsatz erhöht wird.

Ein entsprechender Effekt kann günstigerweise auch dadurch erreicht werden, dass das Kühlelement in dem endständigen Teilbereich quer zur Kühloberfläche eine geringere Dicke aufweist als in den übrigen Bereichen. Die geringere Dicke bezieht sich dabei insbesondere auf die bevorzugte Durchtrittsrichtung des Kühlfluids, d.h. auf eine Richtung senkrecht zur Kühloberfläche. Die Dicke des Kühlelements kann insbesondere auch über den endständigen Teilbereich variieren.

Die vorstehend beschriebenen Ausführungsformen der Erfindung, d.h. eine Modifikation der Permeabilität des offenporigen Materials sowie der geometrischen Struktur des Kühlelements in dem endständigen Teilbereich, können mit besonderem Vorteil auch miteinander kombiniert werden. Auf diese Weise ist es möglich, die Erhöhung des Durchsatzes von Kühlfluid pro Flächeneinheit der Kühloberfläche sehr zielgerichtet und mit einer hohen Genauigkeit einzustellen.

Erfindungsgemäß ist das Kühlelement in Anströmrichtung des Gasstroms mit einem Anschlusselement verbunden, wobei zwischen dem Kühlelement und dem Anschlusselement mindestens ein zu dem Gasstrom hin offener Spalt ausgebildet ist. Das Vorsehen eines oder mehrerer solcher Spalte führt dazu, dass der in dem endständigen Teilbereich erhöhte Durchsatz von Kühlfluid nicht oder nicht vollständig durch die Poren des offenporigen Materials an der Kühloberfläche austritt, sondern dass zumindest ein Teil dieses Kühlfluids durch den mindestens einen Spalt ausgeblasen wird. Auf diese Weise wird eine Art Kühlfluidfilm bereits in dem mindestens einen Spalt vorgebildet, d.h. vor dem Kontakt mit dem Gasstrom. Dadurch kann eine Unterversorgung mit Kühlfluid im Anlaufbereich des Kühlelements besonders wirkungsvoll vermieden werden.

Bevorzugt ist der mindestens eine Spalt so ausgebildet, dass das Kühlfluid durch den mindestens einen Spalt quer zu einer Hauptströmungsrichtung des Gasstroms austritt. Diese Hauptströmungsrichtung verläuft im Wesentlichen entlang der Kühloberfläche des Kühlelements. Besonders günstig ist es, wenn die Austrittsrichtung des Kühlfluids durch den mindestens einen Spalt einen spitzen Winkel zur Hauptströmungsrichtung des Gasstroms bildet. Je kleiner dieser Winkel ist, desto eher kann der vorgebildete Kühlfluidfilm, der durch den mindestens einen Spalt ausgeblasen wird, unmittelbar in den eigentlichen Kühlfluidfilm entlang der Kühloberfläche übergehen. Bei einem zu großen Winkel kann es hingegen zu Verwirbelungen bzw. Turbulenzen kommen, was im Extremfall dann gilt, wenn das Kühlfluid durch den mindestens einen Spalt senkrecht zur Hauptströmungsrichtung des Gasstroms austritt.

Bei dieser bevorzugten Variante der Erfindung wird das Anlegen eines Kühlfluidfilms allein aufgrund der Struktur des Kühlelements bzw. dessen Verbindung mit dem Anschlusselement ermöglicht, ohne dass eine zusätzliche Einkopplung von Kühlfluid über eine separate Kühlfluidleitung oder dergleichen erforderlich wäre. Ein weiterer Vorteil des mindestens einen zu dem Gasstrom hin offenen Spaltes besteht darin, dass ein Dichtungsmaterial, welches zwischen dem Anschlusselement und dem Kühlelement angeordnet ist, hierdurch von dem Gasstrom entkoppelt ist.

Die bevorzugte Breite des mindestens einen Spaltes kann im Rahmen der vorliegenden Erfindung sehr unterschiedlich sein und wird insbesondere von der Auslegung und Dimensionierung der gesamten Kühlvorrichtung abhängen, sowie z.B. auch von der Art des Kühlfluids (d.h. ob eine Effusions- oder eine Transpirationskühlung vorliegt). Günstigerweise ist die Breite des mindestens einen Spaltes größer als die mittlere Porengröße des offenporigen Materials in dem endständigen Teilbereich des Kühlelements. Für typische Anwendungen wie z.B. eine Kühlvorrichtung für eine Heißgaskammervorrichtung kann der mindestens eine Spalt z.B. eine Breite von ca. 50 µm bis ca. 500 µm aufweisen.

Das grundlegende Prinzip der vorliegenden Erfindung kann nicht nur im Anlaufbereich des Kühlelements zum Einsatz kommen, sondern auch, soweit dies erforderlich oder günstig ist, in Bereichen im weiteren Verlauf des Kühlelements. Dementsprechend kann das Kühlelement in Richtung der Hauptströmungsrichtung des Gasstroms bevorzugt in zwei oder mehr Segmente unterteilt sein, wobei jedes Segment in Anströmrichtung des Gasstroms einen endständigen Teilbereich umfasst, in dem der Durchsatz von Kühlfluid pro Flächeneinheit der Kühloberfläche gegenüber den übrigen Bereichen des Segments erhöht ist. Mit einer derartigen Unterteilung des Kühlelements in mehrere Segmente kann insbesondere unterschiedlichen Temperaturzonen des Gasstroms z.B. in einer Brennkammer oder in einem Reaktor Rechnung getragen werden. Im Hinblick auf die mögliche Ausgestaltung der endständigen Teilbereiche der einzelnen Segmente gelten die obigen Ausführungen entsprechend, wobei die Erhöhung des Kühlfluiddurchsatzes bei verschiedenen Segmenten jeweils unterschiedlich ausgeprägt sein kann.

Insbesondere kann bei einer Unterteilung des Kühlelements in zwei oder mehr Segmente vorgesehen sein, dass zwischen benachbarten Segmenten mindestens ein zu dem Gasstrom hin offener Spalt ausgebildet ist. Auch hier kommen die Vorteile zum Tragen, die im Zusammenhang mit dem bevorzugten mindestens einen Spalt zwischen dem Kühlelement und einem anströmseitigen Anschlusselement beschrieben wurden. Bei einer Kühlvorrichtung mit mehreren Segmenten kann somit der Kühlfluidfilm am Beginn jedes Segments neu angelegt und an die Erfordernisse innerhalb dieses Segments angepasst werden.

Die erfindungsgemäße Kühlvorrichtung kann in unterschiedlichen Bereichen zum Schutz gegen extreme thermische Beanspruchungen eingesetzt werden. Gemäß einer bevorzugten Ausführungsform der Erfindung ist die Kühlvorrichtung ein Hitzeschild für ein Raumfahrzeug, wobei die Kühloberfläche einen Teil der Außenhaut des Raumfahrzeugs bildet und wobei der Gasstrom ein atmosphärischer Luftstrom ist. Die Kühlvorrichtung dient hier dem Schutz des Raumfahrzeugs vor der beim Wiedereintritt in die Erdatmosphäre entstehenden Reibungswärme. Der endständige Teilbereich des Kühlelements wird in diesem Fall üblicherweise im Bugbereich des Raumfahrzeugs angeordnet sein. Gleichzeitig bietet sich eine Unterteilung des Kühlelements in mehrere Segmente an, und zwar in der Weise, dass der Kühlfluidfilm jeweils in den Bereichen, die aufgrund der Geometrie des Raumfahrzeugs einer besonders starken Strömung ausgesetzt sind, neu angelegt werden kann.

Gemäß einer weiteren bevorzugten Ausführungsform ist die erfindungsgemäße Kühlvorrichtung eine Kühlvorrichtung für eine Heißgaskammer, wobei der Gasstrom ein Heißgasstrom ist. Die Heißgaskammer umfasst insbesondere eine Brennkammer oder einen Reaktor. Neben den bereits oben angesprochenen Raketentriebwerken kann die erfindungsgemäße Kühlvorrichtung unter anderem auch in Gasturbinen, Heizsystemen, Kraftwerksanlagen, Porenbrennern, Reaktoren von Chemieanlagen, Atomreaktoren oder Fusionsreaktoren eingesetzt werden.

Bei den zuvor genannten Anwendungen ist das Kühlelement typischerweise als Hohlprofil ausgebildet und umschließt die Heißgaskammer. Eine solche Heißgaskammer kann prinzipiell eine beliebige Querschnittsform aufweisen, beispielsweise einen rechteckigen Querschnitt, was z.B. bei Scramjets zum Einsatz kommt.

Bevorzugt ist die Heißgaskammer rotationssymmetrisch ausgebildet, wobei die Symmetrieachse zu einer Hauptströmungsrichtung des Heißgasstroms parallel ist. Die Heißgaskammer kann insbesondere die Form eines Zylinders oder eines Kegelstumpfes aufweisen. Im Fall eines Raketentriebwerks umschließt das Kühlelement z.B. eine zylinderförmige Brennkammer, und die Kühloberfläche bildet die Umfangsfläche dieses Zylinders. Anströmseitig ist das Kühlelement mit einem Einspritzkopf als Anschlusselement verbunden, durch den ein Brennstoff und ein Oxidator in die Brennkammer eingespritzt werden, wobei durch die Verbrennung ein die Brennkammer durchströmender Heißgasstrom entsteht. Dieser tritt durch eine in Abströmrichtung mit dem Kühlelement verbundene Düse wieder aus.

Aus den oben beschriebenen Gründen ist es auch im Fall einer Heißgaskammer besonders günstig, wenn zwischen dem Kühlelement und einem Anschlusselement, mit dem das Kühlelement in Anströmrichtung des Heißgasstroms verbunden ist, mindestens ein zu dem Heißgasstrom hin offener Spalt ausgebildet ist. Der mindestens eine Spalt umfasst dabei vorzugsweise einen Ringspalt. Mittels eines solchen Ringspaltes kann entlang des gesamten Umfangs der Kühloberfläche ein durchgehender Kühlfluidfilm angelegt werden. Alternativ ist z.B. auch möglich, dass an Stelle eines durchgehenden Ringspaltes mehrere einzelne Spalte vorgesehen sind, die entlang der Umfangsrichtung der Heißgaskammer verteilt sind.

Wie bereits oben ausgeführt ist es vorteilhaft, das Kühlfluid durch den mindestens einen Spalt in einem möglichst kleinen Winkel zur Hauptströmungsrichtung des Heißgasstroms in die Heißgaskammer einzublasen, um das Auftreten von Turbulenzen weitgehend zu vermeiden und einen möglichst stabilen Kühlfluidfilm zu erhalten. In der Praxis kann dieser Winkel jedoch aufgrund der konstruktiven Gegebenheiten nicht beliebig klein gewählt werden. Um den Kühlfluidfilm zusätzlich zu stabilisieren, ist der mindestens eine Spalt daher bevorzugt so ausgebildet, dass das austretende Kühlfluid einen Drall in Umfangsrichtung der Heißgaskammer aufweist. Dies kann sowohl durch einen Ringspalt realisiert werden, der entsprechende Strömungselemente z.B. in Form von Rillen aufweist, als auch durch mehrere einzelne Spalte, die entlang der Umfangsrichtung der Heißgaskammer verteilt sind und die eine entsprechende Geometrie aufweisen.

Auf die als Kühlfluid verwendbaren Medien wurde bisher noch nicht im Einzelnen eingegangen. Prinzipiell kann im Rahmen der Erfindung, wie bereits eingangs erwähnt, sowohl ein gasförmiges als auch ein flüssiges Kühlfluid eingesetzt werden, wobei auch ein Phasenwechsel auftreten kann.

Günstig ist es, insbesondere bei Verwendung der erfindungsgemäßen Kühlvorrichtung für eine Heißgaskammer, wenn das Kühlfluid einen Brennstoff umfasst. Als Brennstoff kann z.B. bei Raketentriebwerken Wasserstoff, Methan oder Kerosin eingesetzt werden. Mit besonderem Vorteil kommt hier im Rahmen einer Transpirationskühlung verflüssigter Wasserstoff oder verflüssigtes Methan zum Einsatz.

Gemäß einer weiteren Ausführungsform der Erfindung umfasst das Kühlfluid einen Oxidator. Als möglicher Oxidator ist insbesondere verflüssigter Sauerstoff zu nennen, der sich zur Verwendung als Kühlfluid ebenfalls gut eignet. In diesem Fall umfasst das poröse Material des Kühlelements günstigerweise eine Oxidkeramik.

Die vorliegende Erfindung betrifft des Weiteren eine Heißgaskammervorrichtung, die eine Heißgaskammer mit einer Kühlvorrichtung der vorstehend beschriebenen Art umfasst. Besondere Vorteile und Ausführungsformen einer solchen Heißgaskammervorrichtung wurden bereits im Zusammenhang mit der erfindungsgemäßen Kühlvorrichtung erläutert.

Diese und weitere Vorteile der vorliegenden Erfindung werden anhand der folgenden Ausführungsbeispiele unter Bezugnahme auf die Zeichnung näher erläutert. Es zeigen im Einzelnen:
- Figur 1:: eine schematische Schnittdarstellung einer Kühlvorrichtung gemäß dem Stand der Technik;
- Figur 2:: eine schematische Schnittdarstellung eines ersten Ausführungsbeispiels einer erfindungsgemäßen Kühlvorrichtung;
- Figur 3:: eine schematische Schnittdarstellung eines zweiten Ausführungsbeispiels einer erfindungsgemäßen Kühlvorrichtung;
- Figur 4:: eine schematische Schnittdarstellung eines dritten Ausführungsbeispiels einer erfindungsgemäßen Kühlvorrichtung;
- Figur 5:: eine schematische Schnittdarstellung eines vierten Ausführungsbeispiels einer erfindungsgemäßen Kühlvorrichtung; und
- Figur 6:: eine Variante des Ausführungsbeispiels gemäß der Figur 5 in einer alternativen Darstellung.

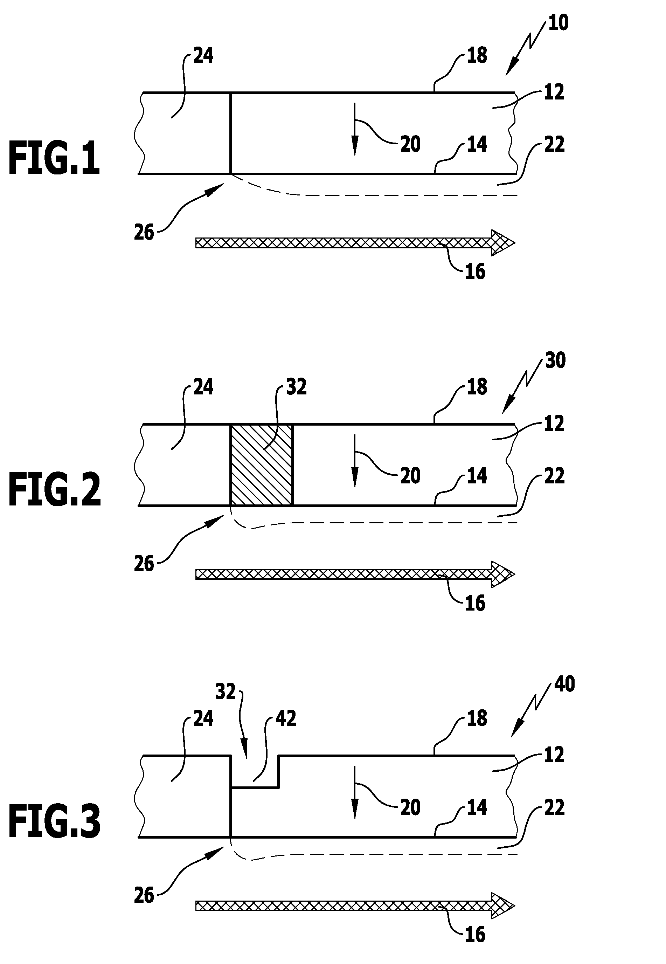

Die Figur 1 zeigt einen Ausschnitt aus einer Kühlvorrichtung gemäß dem Stand der Technik, die als Ganzes mit 10 bezeichnet ist. Die Kühlvorrichtung 10 umfasst ein Kühlelement 12 mit einer Kühloberfläche 14, die einem Heißgasstrom 16 zugewandt ist. Bei der Kühlvorrichtung 10 handelt es sich beispielsweise um eine Kühlvorrichtung für eine Heißgaskammer, insbesondere für die Brennkammer eines Raketentriebwerkes, wobei das Kühlelement 12 als Hohlzylinder ausgebildet ist und die Kühloberfläche 14 die zylinderförmige Brennkammer in Umfangsrichtung umschließt.

Das Kühlelement 12 besteht aus einem offenporigen Material wie z.B. einer Faserverbundkeramik auf Basis von Siliciumcarbid oder einer Oxidkeramik. Ein Kühlfluid wird dem Kühlelement 12 über die der Kühloberfläche 14 gegenüberliegende Oberfläche 18 zugeführt und im Wesentlichen senkrecht zur Kühloberfläche 14 durch die offenporige Struktur des Kühlelements 12 durchgeleitet (dargestellt durch den Pfeil 20). Das Kühlfluid tritt entlang der gesamten Kühloberfläche 14 aus dem Kühlelement 12 aus und bildet dort einen Kühlfluidfilm 22, der einen Teil der durch den Heißgasstrom 16 zugeführten Wärme aufnimmt und das Kühlelement 12 vor einem zu starken Wärmeeintrag schützt. Bei dem Kühlfluid kann es sich im Fall eines Raketentriebwerks um einen Brennstoff (z.B. Wasserstoff, Methan oder Kerosin) oder um einen Oxidator (z.B. Sauerstoff) handeln. Wird das Kühlfluid in flüssiger Form eingesetzt, liegt eine Transpirationskühlung vor, im Fall eines gasförmigen Kühlfluids spricht man von einer Effusionskühlung.

Das Kühlelement 12 ist in Anströmrichtung (bezogen auf die Hauptströmungsrichtung des Heißgasstroms 16) mit einem Anschlusselement 24 verbunden, welches typischerweise aus einem nicht-porösen Material besteht. Das Anschlusselement 24 kann insbesondere der Einspritzkopf eines Raketentriebwerks sein. Im Anlaufbereich 26 des Kühlelements 12, d.h. im Grenzbereich zwischen dem Anschlusselement 24 und dem Kühlelement 12, kommt es bei einer solchen Konstellation zu einer nur unzureichenden Ausbildung des Kühlfluidfilms 22. Obwohl der Durchsatz von Kühlfluid durch das Kühlelement 12 entlang der gesamten Kühloberfläche 14 im Wesentlichen gleich ist, kann sich in dem Anlaufbereich 26 aufgrund des auftreffenden Heißgasstroms 16 noch kein Gleichgewicht zwischen dem austretenden Kühlfluid und dem durch den Heißgasstrom 16 abtransportierten Kühlfluid ausbilden. Durch den fehlenden oder unvollständig ausgeprägten Kühlfluidfilm 22 ist das Kühlelement 12 in dem Anlaufbereich 26 einer starken thermischen Belastung ausgesetzt, was zu dessen Beschädigung und somit zu einem Versagen der Kühlvorrichtung 10 führen kann.

Diese Problematik wird bei den verschiedenen Ausführungsbeispielen der vorliegenden Erfindung, die nachfolgend beschrieben werden, vermieden.

Die Figur 2 zeigt ein erstes Ausführungsbeispiel einer erfindungsgemäßen Kühlvorrichtung, welche als Ganzes mit 30 bezeichnet ist. Die Kühlvorrichtung 30 entspricht in ihrem wesentlichen Aufbau der Kühlvorrichtung 10 gemäß der Figur 1, dabei tragen einander entsprechende Elemente jeweils dasselbe Bezugszeichen. Im Unterschied zum Stand der Technik umfasst das Kühlelement 12 der Kühlvorrichtung 30 einen endständigen Teilbereich 32, in dem der Durchsatz von Kühlfluid pro Flächeneinheit der Kühloberfläche 14 gegenüber den übrigen Bereichen des Kühlelements 12 erhöht ist. Dieser höhere Kühlfluiddurchsatz wird dadurch erreicht, dass das offenporige Material des Kühlelements 12 in dem endständigen Teilbereich 32 eine höhere Permeabilität aufweist, d.h. insbesondere eine höhere Porosität bzw. geringere Dichte. Die Porosität kann z.B. bei einer Faserverbundkeramik durch die Wahl der entsprechenden Parameter beim Herstellungsverfahren in einem weiten Bereich eingestellt werden. Die Permeabilität des offenporigen Materials kann innerhalb des endständigen Teilbereichs 32 konstant sein, sie kann aber auch parallel zur Hauptströmungsrichtung des Heißgasstroms 16 abnehmen, sodass der endständige Teilbereich 32 ohne eine Phasengrenze in den übrigen Bereich des Kühlelements 12 übergeht.

Durch den höheren Kühlfluiddurchsatz in dem endständigen Teilbereich 32 kann sich der Kühlfluidfilm 22 bereits im Anlaufbereich 26 in dem erforderlichen Maß ausbilden, um das Kühlelement 12 vor einer zu starken thermischen Belastung zu schützen. Idealerweise werden die Größe des endständigen Teilbereichs 32 und die Permeabilität des offenporigen Materials in diesem Bereich so gewählt, dass der Kühlfluidfilm 22 entlang der gesamten Kühloberfläche 14 eine gleichmäßige Dicke aufweist, oder sogar entlang des endständigen Teilbereichs 32 etwas dicker ist, wie in der Figur 2 dargestellt.

Die Figur 3 zeigt ein zweites Ausführungsbeispiel einer erfindungsgemäßen Kühlvorrichtung, die als Ganzes mit 40 bezeichnet ist. Ähnlich wie bei der Kühlvorrichtung 30 des ersten Ausführungsbeispiels umfasst auch das Kühlelement 12 der Kühlvorrichtung 40 einen endständigen Teilbereich 32, der an das Anschlusselement 24 angrenzt. Der erhöhte Durchsatz von Kühlfluid pro Flächeneinheit der Kühloberfläche 14 wird in diesem Ausführungsbeispiel dadurch erreicht, dass das Kühlelement 12 in dem endständigen Teilbereich 32 senkrecht zur Kühloberfläche 14 eine geringere Dicke aufweist als in den übrigen Bereichen, während das offenporige Material in sämtlichen Bereichen des Kühlelements 12 gleich ist. Dementsprechend weist das Kühlelement 12 in dem endständigen Teilbereich 32 eine Aussparung 42 auf. Alternativ zu dem in der Figur 2 dargestellten Ausführungsbeispiel kann die Aussparung 42 auch so ausgebildet sein, dass das Kühlelement 12 in dem endständigen Teilbereich 32 eine variable Dicke aufweist, d.h. eine in Hauptströmungsrichtung zunehmende Dicke.

Durch die geringere Dicke des Kühlelements 12 gemäß dem Ausführungsbeispiel der Figur 3 kann im Wesentlichen derselbe vorteilhafte Effekt erreicht werden wie durch die höhere Permeabilität des offenporigen Materials des Kühlelements 12 gemäß dem Ausführungsbeispiel der Figur 2, also die Ausbildung eines ausreichenden Kühlfluidfilms 22 bereits im Anlaufbereich 26, d.h. in dem Grenzbereich zwischen dem Anschlusselement 24 und dem Kühlelement 12. Darüber hinaus kann eine höhere Porosität des offenporigen Materials wie bei der Kühlvorrichtung 30 auch mit einer geringeren Dicke des Kühlelements 12 wie bei der Kühlvorrichtung 40 kombiniert werden, um den gewünschten Effekt möglichst gezielt und präzise einzustellen.

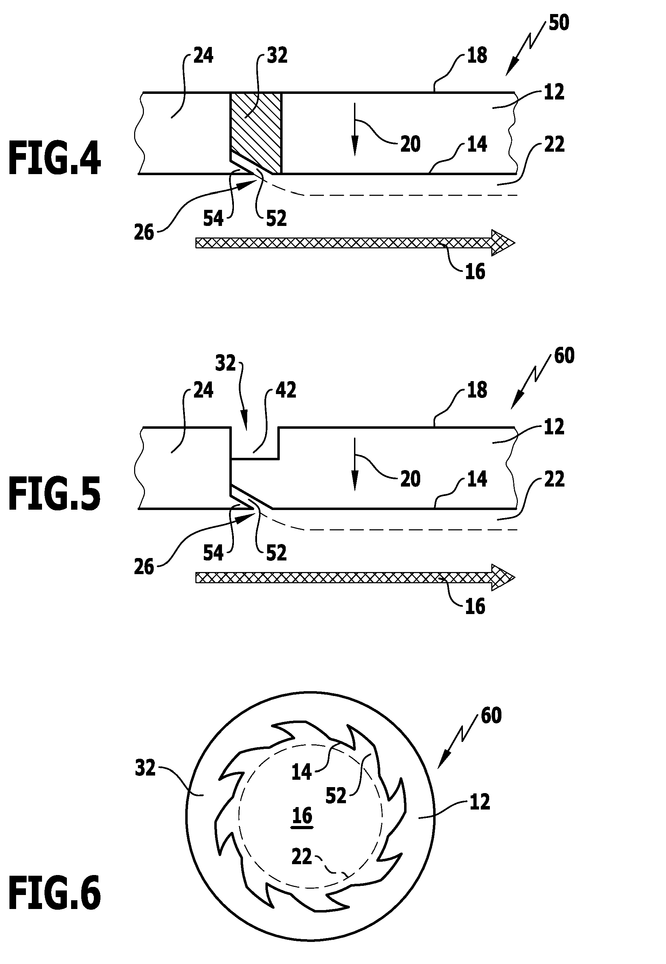

Die Figur 4 zeigt ein drittes Ausführungsbeispiel einer erfindungsgemäßen Kühlvorrichtung, die als Ganzes mit 50 bezeichnet ist. Wie bei dem ersten Ausführungsbeispiel gemäß der Figur 2 umfasst das Kühlelement 12 der Kühlvorrichtung 50 einen in Anströmrichtung des Heißgasstroms 16 endständigen Teilbereich 32, in dem das offenporige Material eine höhere Permeabilität aufweist als in den übrigen Bereichen des Kühlelements 12. Dadurch ist der Durchsatz von Kühlfluid in diesem Bereich erhöht. Das Kühlelement 12 ist anströmseitig so mit dem Anschlusselement 24 verbunden, dass zwischen dem Kühlelement 12 und dem Anschlusselement 24 ein Spalt 52 ausgebildet ist, der zu dem Heißgasstrom hin offen ist. Aufgrund des erhöhten Kühlfluiddurchsatzes durch den endständigen Teilbereich 32 tritt eine relativ große Menge an Kühlfluid in den Spalt 52 ein und wird durch diesen in Form eines vorgebildeten Kühlfluidfilms 22 ausgeblasen. Dadurch wird in dem Anlaufbereich 26 auf besonders effektive Weise eine Unterversorgung mit Kühlfluid vermieden, und der Grenzbereich zwischen dem Anschlusselement 24 und dem Kühlelement 12 wird von dem Heißgasstrom entkoppelt. Auch ein Dichtungsmaterial, welches gegebenenfalls zwischen dem Anschlusselement 24 und dem Kühlelement 12 angeordnet ist (in der Figur nicht dargestellt), ist bei dieser Ausführungsform vor einem direkten Kontakt mit dem Heißgasstrom 16 geschützt.

Der Spalt 52 ist günstigerweise so ausgebildet, dass das Kühlfluid durch den Spalt 52 in einem möglichst spitzen Winkel zur Hauptströmungsrichtung des Heißgasstroms 16 austritt, um Turbulenzen weitgehend zu vermeiden und den Kühlfluidfilm 22 in Form einer möglichst laminaren Strömung anzulegen. Bei dem in der Figur 4 dargestellten Ausführungsbeispiel beträgt dieser Winkel ca. 30°. Der Spalt 52 wird auf der Seite des Anschlusselementes 24 durch einen keilförmigen Fortsatz 54 gebildet, sodass hier der Einblaswinkel des Spaltes 52 konstruktionsbedingt nicht beliebig klein sein kann.

Die Breite des Spaltes 52 kann in Abhängigkeit von den Betriebsbedingungen der Kühlvorrichtung 50 gewählt werden. Typischerweise liegt die Breite des Spaltes 52 maximal in der Größenordnung der Dicke des Kühlfluidfilms 22.

Bei dem Spalt 52, der in der Figur 4 im Querschnitt dargestellt ist und der sich senkrecht zur Zeichenebene erstreckt, kann es sich um einen einzelnen durchgehenden Spalt handeln, also z.B. im Fall eines Raketentriebwerks um einen Ringspalt, der sich entlang des Umfangs des hohlzylinderförmigen Kühlelements 12 erstreckt. Alternativ kann es sich aber auch um mehrere einzelne Spalte handeln, die sich jeweils abschnittsweise entlang dieses Umfangs erstrecken.

Die Figur 5 zeigt ein viertes Ausführungsbeispiel einer erfindungsgemäßen Kühlvorrichtung, die als Ganzes mit 60 bezeichnet ist. Bei der Kühlvorrichtung 60 ist wie bei der Kühlvorrichtung 50 gemäß der Figur 4 ein Spalt 52 zwischen dem Anschlusselement 24 und dem Kühlelement 12 ausgebildet. Gleichzeitig wird der höhere Durchsatz von Kühlfluid durch den endständigen Teilbereich 32 des Kühlelements 12 dadurch erreicht, dass das Kühlelement 12 in dem endständigen Teilbereich 32 eine Aussparung 42 und damit eine geringere Dicke senkrecht zur Kühloberfläche 14 aufweist, wie bei der Kühlvorrichtung 40 gemäß der Figur 3.

Die Figur 6 zeigt eine Querschnittsansicht einer Variante der Kühlvorrichtung 60 senkrecht zur Hauptströmungsrichtung des Heißgasstroms 16. Das Kühlelement 12 ist bei dieser Variante als Hohlzylinder ausgebildet, und die Kühloberfläche 14 stellt die Innenoberfläche dieses Hohlzylinders dar und umschließt eine zylinderförmige Heißgaskammer, z.B. die Brennkammer eines Raketentriebwerks, in Umfangsrichtung. Entlang dieses Umfangs sind zwischen dem endständigen Teilbereich 32 des Kühlelements 12 und dem Anschlusselement 24 eine Vielzahl von Spalten 52 gebildet, durch die Kühlfluid in einem spitzen Winkel zur Hauptströmungsrichtung des Heißgasstroms 16 austritt, wie dies oben beschrieben wurde. Die Spalte 52 sind dabei zusätzlich so ausgeführt, dass das austretende Kühlfluid einen Drall in Umfangsrichtung des Kühlelements 12 aufweist. Durch diesen Drall wird der sich ausbildende Kühlfluidfilm 22 zusätzlich stabilisiert.

## Patentansprüche

1. Kühlvorrichtung (30; 40; 50; 60) für eine Effusions- oder Transpirationskühlung, umfassend ein Kühlelement (12), welches eine einem Gasstrom (16) zugewandte Kühloberfläche (14) aufweist, wobei das Kühlelement (12) aus einem offenporigen Material gebildet ist und wobei ein Kühlfluid quer zur Kühloberfläche (14) durch das Kühlelement (12) durchleitbar ist und an der Kühloberfläche (14) einen Kühlfluidfilm (22) bildet, wobei das Kühlelement (12) in Anströmrichtung des Gasstroms (16) einen endständigen Teilbereich (32) umfasst, in dem der Durchsatz von Kühlfluid pro Flächeneinheit der Kühloberfläche (14) gegenüber den übrigen Bereichen des Kühlelements (12) erhöht ist, **dadurch gekennzeichnet, dass** das Kühlelement (12) in Anströmrichtung des Gasstroms (16) mit einem Anschlusselement (24) verbunden ist, wobei zwischen dem Kühlelement (12) und dem Anschlusselement (24) mindestens ein zu dem Gasstrom (16) hin offener Spalt (52) ausgebildet ist.

2. Kühlvorrichtung (30; 40; 50; 60) nach Anspruch 1, **dadurch gekennzeichnet, dass** das offenporige Material einen Metallschaum oder ein keramisches Material, insbesondere ein keramisches Verbundmaterial, umfasst.

3. Kühlvorrichtung (40; 60) nach einem der vorangehenden Ansprüche, **dadurch gekennzeichnet, dass** das Kühlelement (12) in dem endständigen Teilbereich (32) eine oder mehrere Aussparungen (42) aufweist.

4. Kühlvorrichtung (40; 60) nach einem der vorangehenden Ansprüche, **dadurch gekennzeichnet, dass** das Kühlelement (12) in dem endständigen Teilbereich (32) quer zur Kühloberfläche (14) eine geringere Dicke aufweist als in den übrigen Bereichen.

5. Kühlvorrichtung (50; 60) nach einem der vorangehenden Ansprüche, **dadurch gekennzeichnet, dass** der mindestens eine Spalt (52) so ausgebildet ist, dass das Kühlfluid durch den mindestens einen Spalt (52) in einem spitzen Winkel zur Hauptströmungsrichtung des Gasstroms (16) austritt.

6. Kühlvorrichtung (50; 60) nach einem der vorangehenden Ansprüche, **dadurch gekennzeichnet, dass** der mindestens eine Spalt (52) eine Breite von ca. 50 µm bis ca. 500 µm aufweist.

7. Kühlvorrichtung (30; 40; 50; 60) nach einem der vorangehenden Ansprüche, **dadurch gekennzeichnet, dass** das Kühlelement (12) in Richtung einer Hauptströmungsrichtung des Gasstroms (16) in zwei oder mehr Segmente unterteilt ist, wobei jedes Segment in Anströmrichtung des Gasstroms einen endständigen Teilbereich (32) umfasst, in dem der Durchsatz von Kühlfluid pro Flächeneinheit der Kühloberfläche (14) gegenüber den übrigen Bereichen des Segments erhöht ist, und wobei zwischen benachbarten Segmenten mindestens ein zu dem Gasstrom (16) hin offener Spalt (52) ausgebildet ist.

8. Kühlvorrichtung (30; 40; 50; 60) nach einem der vorangehenden Ansprüche, **dadurch gekennzeichnet, dass** die Kühlvorrichtung (30; 40; 50; 60) ein Hitzeschild für ein Raumfahrzeug ist, wobei die Kühloberfläche (14) einen Teil der Außenhaut des Raumfahrzeugs bildet und wobei der Gasstrom (16) ein atmosphärischer Luftstrom ist.

9. Kühlvorrichtung (30; 40; 50; 60) nach einem der Ansprüche 1 bis 8, **dadurch gekennzeichnet, dass** diese eine Kühlvorrichtung (30; 40; 50; 60) für eine Heißgaskammer ist, wobei der Gasstrom ein Heißgasstrom (16) ist.

10. Kühlvorrichtung (30; 40; 50; 60) nach Anspruch 9, **dadurch gekennzeichnet, dass** das Kühlelement (12) als Hohlprofil ausgebildet ist und die Heißgaskammer umschließt.

11. Kühlvorrichtung (30; 40; 50; 60) nach Anspruch 10, **dadurch gekennzeichnet, dass** das Kühlelement (12) in Anströmrichtung des Heißgasstroms (16) mit einem Anschlusselement (24) verbunden ist, wobei zwischen dem Kühlelement (12) und dem Anschlusselement (24) mindestens ein zu dem Heißgasstrom (16) hin offener Spalt (52), insbesondere ein Ringspalt, ausgebildet ist.

12. Kühlvorrichtung (60) nach Anspruch 11, **dadurch gekennzeichnet, dass** der mindestens eine Spalt (52) so ausgebildet ist, dass das austretende Kühlfluid einen Drall in Umfangsrichtung der Heißgaskammer aufweist.

13. Heißgaskammervorrichtung, umfassend eine Heißgaskammer mit einer Kühlvorrichtung (30; 40; 50; 60) nach einem der Ansprüche 9 bis 12.

## Claims

1. A cooling device (30; 40; 50; 60) for effusion or transpiration cooling, including a cooling element (12) which has a cooling surface (14) facing a gas current (16), wherein the cooling element (12) is formed from an open-pore material, and wherein a cooling fluid is guidable through the cooling element (12) in a direction transverse to the cooling surface (14) and forms a cooling fluid film (22) on the cooling surface (14), wherein the cooling element (12) includes, in the direction of incoming flow of the gas current (16), an end sub-region (32) in which the throughput of cooling fluid per unit surface area of the cooling surface (14) is higher than in the other regions of the cooling element (12), **characterised in that** the cooling element (12) is connected, in the direction of incoming flow of the gas current (16), to a terminal connection element (24), wherein at least one gap (52) that is open towards the gas current (16) is formed between the cooling element (12) and the terminal connection element (24).

2. A cooling device (30; 40; 50; 60) according to Claim 1, **characterised in that** the open-pore material comprises a metal foam or a ceramic material, in particular a ceramic composite material.

3. A cooling device (40; 60) according to one of the preceding claims, **characterised in that** the cooling element (12) has one or more recesses (42) in the end sub-region (32).

4. A cooling device (40; 60) according to one of the preceding claims, **characterised in that** the cooling element (12) has a smaller thickness in the end sub-region (32), in a direction transverse to the cooling surface (14), than in the other regions.

5. A cooling device (50; 60) according to one of the preceding claims, **characterised in that** the at least one gap (52) takes a form such that the cooling fluid exits through the at least one gap (52) at an acute angle to the main direction of flow of the gas current (16).

6. A cooling device (50; 60) according to one of the preceding claims, **characterised in that** the at least one gap (52) has a thickness of approximately 50 µm to approximately 500 µm.

7. A cooling device (30; 40; 50; 60) according to one of the preceding claims, **characterised in that** the cooling element (12) is divided into two or more segments in the direction of a main direction of flow of the gas current (16), wherein each segment includes, in the direction of incoming flow of the gas current, an end sub-region (32) in which the throughput of cooling fluid per unit surface area of the cooling surface (14) is higher than in the other regions of the segment, and wherein at least one gap (52) that is open towards the gas current (16) is formed between adjacent segments.

8. A cooling device (30; 40; 50; 60) according to one of the preceding claims, **characterised in that** the cooling device (30; 40; 50; 60) is a heat shield for a spacecraft, wherein the cooling surface (14) forms part of the outer skin of the spacecraft, and wherein the gas current (16) is an atmospheric air current.

9. A cooling device (30; 40; 50; 60) according to one of Claims 1 to 8, **characterised in that** it is a cooling device (30; 40; 50; 60) for a hot gas chamber, wherein the gas current is a hot gas current (16).

10. A cooling device (30; 40; 50; 60) according to Claim 9, **characterised in that** the cooling element (12) takes the form of a hollow profile and surrounds the hot gas chamber.

11. A cooling device (30; 40; 50; 60) according to Claim 10, **characterised in that** the cooling element (12) is connected, in the direction of incoming flow of the hot gas current (16), to a terminal connection element (24), wherein at least one gap (52) that is open towards the hot gas current (16), in particular an annular gap, is formed between the cooling element (12) and the terminal connection element (24).

12. A cooling device (60) according to Claim 11, **characterised in that** the at least one gap (52) takes a form such that the exiting cooling fluid has a swirling motion in the peripheral direction of the hot gas chamber.

13. A hot gas chamber device, including a hot gas chamber having a cooling device (30; 40; 50; 60) according to one of Claims 9 to 12.

## Revendications

1. Dispositif de refroidissement (30 ; 40 ; 50 ; 60) pour un refroidissement par effusion ou par transpiration, comprenant un élément de refroidissement (12), qui présente une surface de refroidissement (14) tournée vers un flux de gaz (16), dans lequel l'élément de refroidissement (12) est formé à partir d'un matériau à pores ouverts et un fluide de refroidissement peut être acheminé à travers l'élément de refroidissement (12) de manière transversale par rapport à la surface de refroidissement (14) et forme, au niveau de la surface de refroidissement (14), un film de fluide de refroidissement (22), dans lequel l'élément de refroidissement (12) comprend, dans la direction du flux arrivant du flux de gaz (16), une zone partielle (32) terminale, dans laquelle le débit de fluide de refroidissement est augmenté par unité de surface de la surface de refroidissement (14) par rapport aux zones restantes de l'élément de refroidissement (12),
**caractérisé en ce que** l'élément de refroidissement (12) est relié à un élément de raccordement (24) dans la direction de flux arrivant du flux de gaz (16), dans lequel au moins une fente (52) ouverte en direction du flux de gaz (16) est réalisée entre l'élément de refroidissement (12) et l'élément de raccordement (24).

2. Dispositif de refroidissement (30 ; 40 ; 50 ; 60) selon la revendication 1, **caractérisé en ce que** le matériau à pores ouverts comprend une mousse métallique ou un matériau en céramique, en particulier un matériau composite en céramique.

3. Dispositif de refroidissement (40 ; 60) selon l'une quelconque des revendications précédentes, **caractérisé en ce que** l'élément de refroidissement (12) présente, dans la zone partielle (32) terminale, un ou plusieurs évidements (42).

4. Dispositif de refroidissement (40 ; 60) selon l'une quelconque des revendications précédentes, **caractérisé en ce que** l'élément de refroidissement (12) présente, dans la zone partielle (32) terminale, de manière transversale par rapport à la surface de refroidissement (14), une plus petite épaisseur que dans les zones restantes.

5. Dispositif de refroidissement (50 ; 60) selon l'une quelconque des revendications précédentes, **caractérisé en ce que** l'au moins une fente (52) est réalisée de telle sorte que le fluide de refroidissement sort par l'au moins une fente (52) selon un angle aigu par rapport à la direction principale d'écoulement du flux de gaz (16).

6. Dispositif de refroidissement (50 ; 60) selon l'une quelconque des revendications précédentes, **caractérisé en ce que** l'au moins une fente (52) présente une largeur allant d'environ 50 µm à environ 500 µm.

7. Dispositif de refroidissement (30 ; 40 ; 50 ; 60) selon l'une quelconque des revendications précédentes, **caractérisé en ce que** l'élément de refroidissement (12) est divisé en deux segments ou plus en direction d'une direction principale d'écoulement du flux de gaz (16), dans lequel chaque segment comprend, dans la direction de flux arrivant, du flux de gaz, une zone partielle (32) terminale, dans laquelle le débit de fluide de refroidissement par unité de surface de la surface de refroidissement (14) est augmenté par rapport aux zones restantes du segment, et dans lequel au moins une fente (52) ouverte en direction du flux de gaz (16) est réalisée entre des segments adjacents.

8. Dispositif de refroidissement (30 ; 40 ; 50 ; 60) selon l'une quelconque des revendications précédentes, **caractérisé en ce que** le dispositif de refroidissement (30 ; 40 ; 50 ; 60) est un bouclier de chaleur pour un engin spatial, dans lequel la surface de refroidissement (14) forme une partie de l'enveloppe extérieure de l'engin spatial et dans lequel le flux de gaz (16) est un flux d'air atmosphérique.

9. Dispositif de refroidissement (30 ; 40 ; 50 ; 60) selon l'une quelconque des revendications 1 à 8, **caractérisé en ce que** ce dernier est un dispositif de refroidissement (30 ; 40 ; 50 ; 60) pour une chambre de gaz chaud, dans lequel le flux de gaz est un flux de gaz chaud (16).

10. Dispositif de refroidissement (30 ; 40 ; 50 ; 60) selon la revendication 9, **caractérisé en ce que** l'élément de refroidissement (12) est réalisé sous la forme d'un profilé creux et renferme la chambre de gaz chaud.

11. Dispositif de refroidissement (30 ; 40 ; 50 ; 60) selon la revendication 10, **caractérisé en ce que** l'élément de refroidissement (12) est relié à un élément de raccordement (24) dans la direction de flux arrivant du flux de gaz chaud (16), dans lequel au moins une fente (52) ouverte en direction du flux de gaz chaud (16), en particulier une fente annulaire, est réalisée entre l'élément de refroidissement (12) et l'élément de raccordement (24).

12. Dispositif de refroidissement (60) selon la revendication 11, **caractérisé en ce que** l'au moins une fente (52) est réalisée de telle sorte que le fluide de refroidissement sortant présente un moment cinétique dans la direction périphérique de la chambre de gaz chaud.

13. Dispositif à chambre de gaz chaud, comprenant une chambre de gaz chaud pourvue d'un dispositif de refroidissement (30 ; 40 ; 50 ; 60) selon l'une quelconque des revendications 9 à 12.
